# EUROPEAN PATENT APPLICATION

(11) **EP 4 254 135 A2**
(43) Date of publication of application: **04.10.2023**
(21) Application number: 23164555.7
(22) Date of filing: 28.03.2023
(51) Int. Cl.: G06F 1/26, G06F 1/3203, G05D 22/00, G05D 23/00

(54) **DEVICE ASSEMBLY COMPRISING SENSOR SYSTEM**

(30) Priority: 30.03.2022 IN 202241018965
(71) Applicant: ABB SCHWEIZ AG, 5400 Baden (CH)
(72) Inventor: Patel, Nishith, 560037 Bangalore (IN); Mistry, Samir, 401105 Bhayander (IN); Nykvist, Martin, 65320 Vaasa (FI); Narendra, Pavan, 560024 Bangalore (IN); Lemmens, Hubertus, 7641DH Wierden (NL)
(74) Representative: Kolster Oy Ab

(57) **Abstract**

A device assembly comprising a supply connection (101) adapted to be electrically connected to a power source; a microcontroller (2); a sensor system (4) adapted to measure at least one environmental parameter; and a supercapacitor (8). The device assembly has a first operating state, in which power is supplied by a first power supply link (11) from the supply connection (101) to the microcontroller (2), and a second operating state, in which power is supplied by a second power supply link (12) from the supercapacitor (8) to the microcontroller (2), and the microcontroller (2) is alternately in an inactive mode and an active mode.

## Description

### FIELD OF THE INVENTION

The present invention relates to a device assembly comprising a sensor system adapted to measure at least one environmental parameter.

### BACKGROUND OF THE INVENTION

A known device assembly comprises a supply connection, a microcontroller, and a sensor system adapted to measure at least one environmental parameter, wherein the microcontroller is adapted to obtain measuring results from the sensor system. The device assembly has a first operating state and a second operating state such that in the first operating state, power is supplied from the supply connection to the microcontroller, and in the second operating state, power is supplied from a battery to the microcontroller. The supply connection is connected for example to a distribution network, and the battery is utilized as a power supply only in situations where the distribution network is unable to supply power to the supply connection.

One of the problems associated with the above known device assembly is that the battery requires maintenance. The battery must be replaced when it is empty. If the known device assembly is stored for a long time, it is possible that the battery is dead when the device assembly is commissioned, in which case the battery must be replaced before the second operating state is available.

### BRIEF DESCRIPTION OF THE INVENTION

An object of the present invention is to provide a device assembly so as to solve the above problems. The objects of the invention are achieved by a device assembly which is characterized by what is stated in the independent claim. The preferred embodiments of the invention are disclosed in the dependent claims.

The invention is based on the idea of providing a device assembly with a supercapacitor and a second operating state, in which power is supplied from the supercapacitor to the microcontroller, and the microcontroller is alternately in an inactive mode and an active mode.

An advantage of the device assembly of the invention is that energy consumption thereof is lower in the second operating state than in the first operating state. Another advantage of the device assembly of the invention is that the supercapacitor is maintenance-free.

### BRIEF DESCRIPTION OF THE DRAWINGS

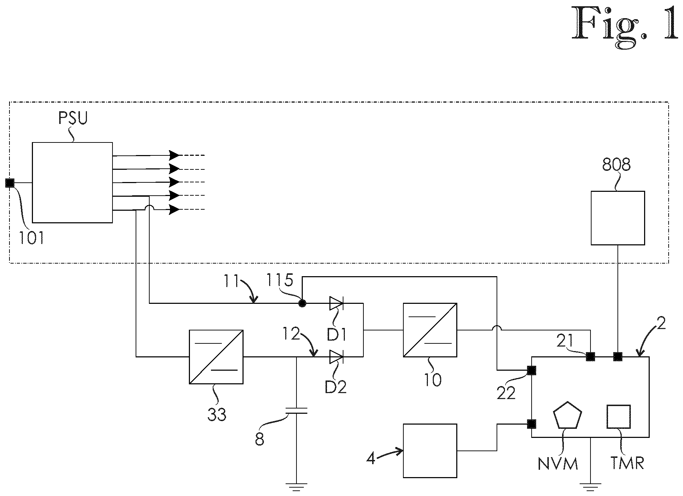

In the following the invention will be described in greater detail by means of preferred embodiments with reference to the attached Figure 1 which shows a circuit diagram of a device assembly according to an embodiment of the invention.

### DETAILED DESCRIPTION OF THE INVENTION

Figure 1 shows a circuit diagram of a device assembly comprising a supply connection 101, a power supply unit PSU, a host processor 808, a microcontroller 2, a non-volatile memory system NVM, a timer TMR, a sensor system 4, a supercapacitor 8, a voltage regulator 10, a charger 33, a first power supply link 11, and a second power supply link 12.

The supply connection 101 is adapted to be electrically connected to a power source. In an embodiment, the supply connection is adapted to be electrically connected to an alternating current distribution network.

The sensor system 4 is adapted to measure temperature and humidity. The sensor system 4 is communicatively connected to the microcontroller 2. In an alternative embodiment, the sensor system is adapted to measure at least one environmental parameter, wherein the at least one environmental parameter comprises temperature, humidity, shock, gases and/or barometric pressure.

The microcontroller 2 is adapted to obtain measuring results from the sensor system 4, and to store the measuring results in the non-volatile memory system NVM.

The first power supply link 11 is adapted for supplying power from the supply connection 101 to the microcontroller 2. The second power supply link 12 is adapted for supplying power from the supercapacitor 8 to the microcontroller 2.

The device assembly has a first operating state and a second operating state. In the first operating state, power is supplied from the supply connection 101 by the first power supply link 11 to the microcontroller 2, and the microcontroller 2 is in an active mode, in which the microcontroller 2 is adapted to obtain measuring results from the sensor system 4. In the second operating state, power is supplied from the supercapacitor 8 by the second power supply link 12 to the microcontroller 2, and the microcontroller 2 is alternately in an inactive mode and the active mode.

In the inactive mode, the microcontroller 2 is in a state in which energy consumption of the microcontroller 2 is less than or equal to 10% of energy consumption of the microcontroller 2 in the active mode. In another embodiment, in the inactive mode, the microcontroller is in a low power state in which energy consumption of the microcontroller is less than or equal to 1% of energy consumption of the microcontroller in the active mode. In a further embodiment, the microcontroller is in an OFF state in the inactive mode.

Therefore, energy consumption of the device assembly is lower in the second operating state than in the first operating state.

In the active mode, the microcontroller 2 is adapted to detect whether power is available from the supply connection 101, and to transfer itself to the inactive mode as a response to a situation where power is not available from the supply connection 101. In an alternative embodiment, another component of the device assembly is adapted to detect whether power is available from the supply connection, and to transfer the device assembly to the second operating state as a response to a situation where power is not available from the supply connection.

In the inactive mode, the microcontroller 2 is adapted to detect whether power is available from the supply connection 101, and to transfer itself to the active mode as a response to a situation where power is available from the supply connection 101. In an alternative embodiment, another component of the device assembly is adapted to detect whether power is available from the supply connection, and to transfer the device assembly to the first operating state as a response to a situation where power is available from the supply connection.

The timer TMR is adapted to carry out switching-on events during the second operating state, the switching-on event comprising switching the microcontroller 2 from the inactive mode to the active mode. The timer TMR is adapted to carry out the switching-on events periodically during the second operating state, wherein an interval between successive switching-on events is in a range of ten minutes to ten hours. The timer TMR comprises a real time clock. During the second operating state, the timer TMR is powered by the supercapacitor 8 through the second power supply link 12.

In an embodiment, the non-volatile memory system is integrated in the microcontroller, and the sensor system, the supercapacitor, the timer and the microcontroller are incorporated on the same circuit board.

After the timer TMR has switched the microcontroller 2 from the inactive mode to the active mode, the microcontroller 2 obtains measuring results from the sensor system 4, stores the measuring results in the non-volatile memory system NVM, and switches itself to the inactive mode. In an alternative embodiment, the timer is adapted to carry out both switching-on events and switching-off events during the second operating state, the switching-off event comprising switching the microcontroller from the active mode to the inactive mode.

The voltage regulator 10 is adapted to automatically maintain a constant voltage at an output thereof as long as voltage at an input of the voltage regulator 10 remains within a predetermined range. The voltage regulator 10 is common to both the first power supply link 11 and the second power supply link 12. An output voltage at the output of the voltage regulator 10 is lower than a nominal voltage of the supercapacitor 8. The nominal voltage of the supercapacitor 8 is lower than a voltage supplied through the first power supply link 11 to the voltage regulator 10.

In an embodiment, the output voltage at the output of the voltage regulator is in a range of 1.5-4V, the nominal voltage of the supercapacitor is in a range of 2.5-5V, and the voltage supplied through the first power supply link to the voltage regulator is in a range of 3-6V.

The first power supply link 11 comprises a first diode D1 between the supply connection 101 and the voltage regulator 10. The first diode D1 is adapted to allow power supply exclusively towards the voltage regulator 10.

The second power supply link 12 comprises a second diode D2 between the supercapacitor 8 and the voltage regulator 10. The second diode D2 is adapted to allow power supply exclusively towards the voltage regulator 10. The second diode D2 does not conduct in the first operating state.

The first power supply link 11 and the second power supply link 12 provide an uninterrupted power supply to the microcontroller 2. When the device assembly transfers from the first operating state to the second operating state, the second diode D2 starts to conduct at the same moment the first diode D1 ceases to conduct.

The microcontroller 2 comprises a supply terminal 21 and a monitoring terminal 22. The supply terminal 21 is part of the first power supply link 11 such that the first power supply link 11 is adapted for supplying power from the supply connection 101 to the microcontroller 2 through the supply terminal 21. The supply terminal 21 is electrically connected to the output of the voltage regulator 10.

The monitoring terminal 22 is electrically connected to the first power supply link 11 at a detection point 115 between the supply connection 101 and the voltage regulator 10. The detection point 115 is electrically connected to an input of the voltage regulator 10 through the first diode D1.

An absolute value of a nominal voltage of the detection point 115 is higher than an absolute value of the output voltage of the voltage regulator 10. In an embodiment a difference between the absolute value of the nominal voltage of the detection point and the absolute value of the output voltage of the voltage regulator is in a range of 0.5 to 2.0 V.

The device assembly is adapted to detect whether power is available from the supply connection 101 by detecting whether a voltage at the monitoring terminal 22 is within a predetermined supply range. The monitoring terminal 22 is not adapted for power supply.

The first power supply link 11 comprises the power supply unit PSU electrically between the supply connection 101 and the detection point 115.

The charger 33 is adapted for charging the supercapacitor 8 from the supply connection 101 through the power supply unit PSU. The power supply unit PSU is electrically located between the supply connection 101 and the charger 33.

The supercapacitor 8 is rated such that it is able to provide power for the second operating state of the device assembly for at least one week. In an alternative embodiment, the supercapacitor is rated such that it is able to provide power for the second operating state of the device assembly for at least three days.

The power supply unit PSU comprises a plurality of output terminals. A first output terminal of the power supply unit PSU is electrically connected to the detection point 115. A second output terminal of the power supply unit PSU is electrically connected to the charger 33. A nominal voltage of the first output terminal of the power supply unit PSU is lower than a nominal voltage of the second output terminal of the power supply unit PSU.

The charger 33 is a DC to DC converter adapted to charge the supercapacitor 8 with constant current until a voltage of the supercapacitor 8 has reached a predetermined level whose absolute value is lower than the absolute value of the nominal voltage of the detection point 115.

The supply connection 101 is adapted to be electrically connected to an alternating current power source. The power supply unit PSU is a rectifier. In an alternative embodiment in which the supply connection is adapted to be electrically connected to a direct current power source, the power supply unit PSU is a DC to DC converter.

The host processor 808 is communicatively connected to the microcontroller 2, and is adapted to be supplied from the supply connection 101 through the power supply unit PSU.

The host processor 808 is adapted to control the microcontroller 2 during the first operating state of the device assembly. During the second operating state of the device assembly, the host processor 808 is in an OFF state.

During the first operating state of the device assembly, the host processor 808 is adapted to obtain measuring results from the sensor system 4, and to store the measuring results in a memory system. In an embodiment, the host processor is adapted to store the measuring results in the non-volatile memory system, wherein the measuring results are stored in the same system both in the first operating state and in the second operating state. In a further embodiment, the microcontroller is adapted to obtain measuring results from the sensor system, and to store the measuring results in the non-volatile memory system both in the first operating state and in the second operating state.

In an embodiment, the device assembly comprises an electrical device having a housing, and the sensor system is adapted to measure the at least one environmental parameter inside the housing. In this embodiment, the measurements made during the second operating state are adapted for monitoring conditions of the electrical device in situations where power is not available from the supply connection. Unfavourable conditions of the electrical device may damage the electrical device, or unfavourable conditions of the electrical device during the second operating state may require special measures before starting the electrical device. For example, high humidity and/or low temperature during the second operating state may require heating the electrical device before it can be safely started, or at least the starting must be delayed until the electrical device has sufficiently dried and/or warmed up.

An example of the electrical device of the device assembly is a protection relay. In alternative embodiments, the electrical device of the device assembly comprises another type of relay, a switching device and/or a converter. An example of the switching device is a circuit breaker, and an example of the converter is a frequency converter.

In an embodiment, measurements made during the first operating state are the same as measurements made during the second operating state, and the only difference is that measurements are carried out more frequently in the first operating state than in the second operating state. In another embodiment, the device assembly is adapted to measure more environmental parameters in the first operating state than in the second operating state.

In a further embodiment, the device assembly has a first measurement accuracy in the first operating state, and a second measurement accuracy in the second operating state, wherein the first measurement accuracy is higher than the second measurement accuracy. In an example, during the second operating state, temperature values are stored in temperature bins which are 10°C wide, and humidity values are stored in humidity bins which are 10% RH wide, while during the first operating state, temperature values are stored in temperature bins which are 1°C wide, and humidity values are stored in humidity bins which are 1% RH wide. Together with the alternation between the inactive mode and the active mode of the microcontroller, the lower measurement accuracy in the second operating state enables considerable energy saving.

It will be obvious to a person skilled in the art that the inventive concept can be implemented in various ways. The invention and its embodiments are not limited to the examples described above but may vary within the scope of the claims.

## Claims

1. A device assembly comprising:
a supply connection (101) adapted to be electrically connected to a power source;
a microcontroller (2);
a first power supply link (11) adapted for supplying power from the supply connection (101) to the microcontroller (2); and
a sensor system (4) adapted to measure at least one environmental parameter, wherein the sensor system (4) is communicatively connected to the microcontroller (2);
a non-volatile memory system (NVM), wherein the microcontroller (2) is adapted to obtain measuring results from the sensor system (4), and to store the measuring results in the non-volatile memory system (NVM),
wherein the device assembly has a first operating state, in which power is supplied by the first power supply link (11) to the microcontroller (2), and the microcontroller (2) is in an active mode, in which the microcontroller (2) is adapted to obtain measuring results from the sensor system (4),
**characterized in that** the device assembly comprises
a supercapacitor (8); and
a second power supply link (12) adapted for supplying power from the supercapacitor (8) to the microcontroller (2),
wherein the device assembly has a second operating state, in which power is supplied from the supercapacitor (8) by the second power supply link (12) to the microcontroller (2), and the microcontroller (2) is alternately in an inactive mode and the active mode, wherein energy consumption of the device assembly is lower in the second operating state than in the first operating state, and
wherein the device assembly is adapted to detect whether power is available from the supply connection (101), and to transfer to the second operating state as a response to a situation where power is not available from the supply connection (101).

2. The device assembly according to claim 1, wherein the device assembly comprises a timer (TMR) adapted to carry out switching-on events during the second operating state, the switching-on event comprising switching the microcontroller (2) from the inactive mode to the active mode.

3. The device assembly according to claim 2, wherein the timer (TMR) is adapted to carry out the switching-on events periodically during the second operating state, wherein an interval between successive switching-on events is in a range of ten minutes and ten hours.

4. The device assembly according to any one of the preceding claims, wherein the microcontroller (2) is adapted to detect whether power is available from the supply connection (101), and to transfer itself to the inactive mode as a response to a situation where power is not available from the supply connection (101).

5. The device assembly according to any one of the preceding claims, wherein the device assembly comprises a voltage regulator (10) common to both the first power supply link (11) and the second power supply link (12), wherein an output voltage at an output of the voltage regulator (10) is lower than a nominal voltage of the supercapacitor (8).

6. The device assembly according to claim 5, wherein the nominal voltage of the supercapacitor (8) is lower than a voltage supplied through the first power supply link (11) to the voltage regulator (10).

7. The device assembly according to claim 5 or 6, wherein the first power supply link (11) comprises a first diode (D1) between the supply connection (101) and the voltage regulator (10), and the second power supply link (12) comprises a second diode (D2) between the supercapacitor (8) and the voltage regulator (10).

8. The device assembly according to any one of claims 5 to 7, wherein the microcontroller (2) comprises a supply terminal (21) electrically connected to the output of the voltage regulator (10), and a monitoring terminal (22) electrically connected to the first power supply link (11) at a detection point (115) between the supply connection (101) and the voltage regulator (10), wherein the device assembly is adapted to detect whether power is available from the supply connection (101) by detecting whether a voltage at the monitoring terminal (22) is within a predetermined supply range.

9. The device assembly according to claim 8, wherein an absolute value of a nominal voltage of the detection point (115) is higher than an absolute value of the output voltage of the voltage regulator (10).

10. The device assembly according to any one of the preceding claims, wherein the device assembly comprises a charger (33) adapted for charging the supercapacitor (8) from the supply connection (101).

11. The device assembly according to claim 1, wherein the device assembly comprises a host processor which is communicatively connected to the microcontroller, and is adapted to control the microcontroller (2) during the first operating state, wherein the host processor is adapted to be supplied from the supply connection (101).

12. The device assembly according to any one of the preceding claims, wherein the device assembly comprises a protection relay having a housing, and the sensor system (4) is adapted to measure the at least one environmental parameter inside the housing.
